# EUROPEAN PATENT SPECIFICATION

(11) **EP 2 145 136 B1**
(45) Date of publication and mention of the grant of the patent: **21.03.2018**
(21) Application number: 08736818.9
(22) Date of filing: 08.04.2008
(51) Int. Cl.: F24F 13/02, F16L 21/035, F16L 17/025, F16J 15/14

(54) **METHOD FOR FORMING A SEAL BETWEEN AIR DUCTS AND/OR TERMINAL UNITS THEREOF AND AN AIR DUCT**
VERFAHREN ZUR BILDUNG EINER DICHTUNG ZWISCHEN LUFTKANÄLEN UND/ODER IHREN ANSCHLUSSEINHEITEN SOWIE EIN LUFTKANAL
PROCÉDÉ DE FORMATION D'UN JOINT ENTRE DES CONDUITS D'AIR ET/OU DES UNITÉS TERMINALES ET CONDUIT D'AIR

(30) Priority: 14.05.2007 FI 20075346
(43) Date of publication of application: 20.01.2010
(73) Proprietor: Fläkt Woods AB, 55184 Jönköping (SE)
(72) Inventor: HOKKANEN, Jari, 37800 Toijala (FI); TIAINEN, Hannu, 37600 Valkeakoski (FI)
(74) Representative: Heinänen Oy Patent Agency
(86) International application number: PCT/FI2008/050169
(87) International publication number: WO 2008/139024

(56) References cited:
- EP-A1- 0 596 230
- EP-A1- 0 999 397
- WO-A1-2007/049763
- DE-A1- 3 141 114
- DE-A1- 3 141 114
- JP-A- 2004 323 833
- US-A- 3 540 747
- US-A- 5 169 161
- US-A1- 2002 153 725
- US-A1- 2006 192 349

## Description

The present invention concerns a method for forming a seal between air ducts and/or terminal units thereof, the method comprising the step of extruding a caulking compound about the perimeter of the air duct to form a continuous seal.

When joining air ducts or terminal units thereof so as to slide the elements partially overlappingly over one another, it is necessary to use a continuous seal encircling the entire perimeter of the inner duct element. This kind of rubber seals are available in factory-made shapes that can be mounted about the inner duct element and secured by way of, e.g., folding the front edge of the duct over the attachment base of the seal. The seal must have such a flexibility that it can bend down to fit into the narrow gap of the elements being joined. More specifically, the invention relates to ducts and/or terminal units of a round cross section, while also ducts of other shapes, e.g., oval or rectangular ducts are covered by the invention. However, the invention is next elucidated for use in conjunction with round ducts.

In the art is also known a method of making an annular seal by extruding a sealing bead of caulking compound about the duct. Caulking compounds, e.g., one traded under the product name of Sikaflex®, are suited for this application. After curing, the caulk adheres firmly to the duct surface thus needing no additional securing. The shape of the caulking spout is selected such that the seal directly assumes its desired cross section and an elastic form. The seal is extruded about the entire perimeter of the duct and, to secure its continuity, at the end along short distance in a parallel overlapping fashion. The overlapping length of the parallel beads invokes a risk of leak unless the overlapping beads cannot be brought to a full lateral contact with each other. Hence, the caulking process requires high precision and yet carries the risk of producing a leaky seal.

US 5169161 A discloses a gasket for sealing the annular space in a bell-and-pigot pipe joint, the gasket having a continuous elastomeric web having an inner peripheral surface formed to sealingly engage the outer periphery of a spigot, and a plurality of identical elastomeric ribs integrally formed with and projecting radially outward from said web.

US 2006/192349 A1 discloses a permanently lubricated film gasket for providing a fluid-tight seal between a corrugated pipe and smooth annular section of an outer pipe. A first portion of the gasket is shaped to fit within a groove or recess of the corrugated pipe. A second portion of the gasket extends from the first portion.

US 3540 747 A discloses a self-locking gasket of resilient material. It is constituted of by two bead-shaped outer parts extending alongside each other and connected by a narrower intermediate part.

US 2002/153725 A1 discloses a self-sealing gasket having two aligned beads.

It is an object of the present invention to achieve a method offering easy fabrication of the seal that is circumferentially leakproof and substantially continuous. The method according to the invention is defined in claim 1. A preferred embodiment of the method according to the invention is characterized in that the caulking compound is extruded about the perimeter of a generally round duct and/or a terminal device thereof.

It is a further object of the invention to provide an air duct fabricated according to the method. The air duct according to the invention is defined in claim 3. The benefits of the seal according to the invention include that its application disposes with the need for a separate fastening step, since during its curing the caulking compound adheres firmly to the surface thereunder. In the same fashion, also the superimposed layers of the seal adhere to each other as the caulking compound is cured. Moreover, the finished seal is entirely leakproof due to the lack of discontinuities.

The invention is next described in more detail with the help of a preferred exemplifying embodiment by making reference to the appended drawings in which
FIG. 1 shows in an air-conditioning system an axonometric view of a mounting frame of a terminal device equipped with a seal according to the invention;
FIG. 2 shows a cross-sectional view of the mounting frame; and
FIG. 3 shows an enlarged view of detail B of FIG. 2.

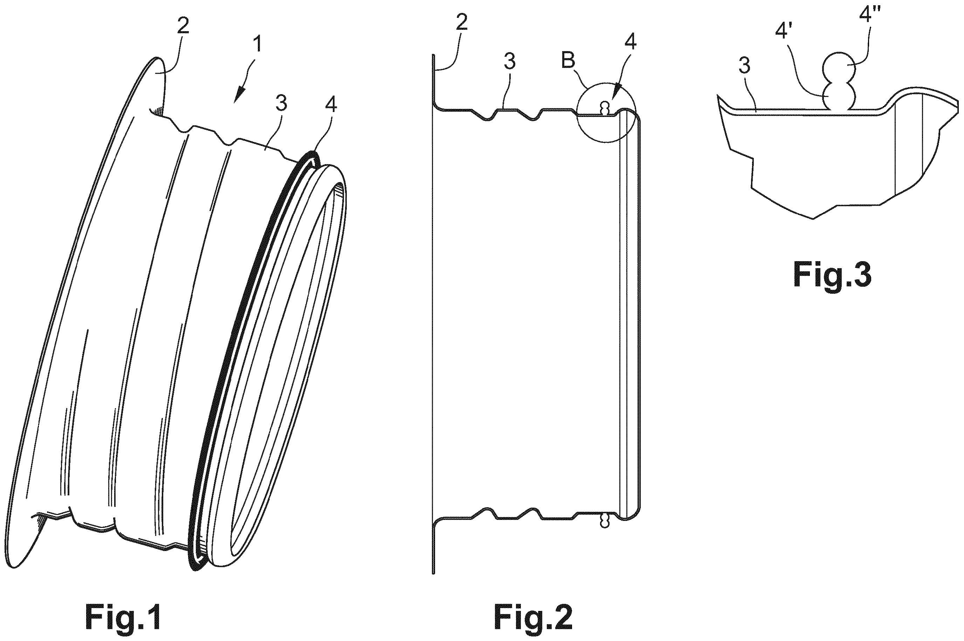

Accordingly, FIG. 1 illustrates a mounting frame 1, whose front edge 2 is fastened to the wall and whose tubular section 3 is attached to an air duct (not shown) by inserting the tubular section having a seal 4 thereon into the bore of the air duct. The joint is tight and the seal 4 adapted about the perimeter of the tubular section seals the joint in a conventional fashion by bending over into the gap between the elements being joined. As mentioned earlier, this description relates to air ducts of round cross section, but also other shapes of the air duct/terminal device cross section may be contemplated equally. Of them, particularly an oval air duct shape is fully compatible with the invention, as well as a rectangular air duct shape.

Again referring to FIG. 1, therein is shown a mounting frame employed in a conventional fashion to install a terminal device of a desired type, such as an inlet or outlet damper, for instance. However, a mounting frame 1 is only an exemplary case of the plural different ducts and devices compatible with this kind of a joint/seal arrangement.

FIGS. 2 and 3 illustrate the structure of seal 4 in greater detail. The seal comprises two superimposed seal layers 4' and 4", each having a substantially round cross section and adhering to each other. The essential feature of the seal is that the bead of the second seal layer adheres to and stays firmly on the first layer thus eliminating discontinuities in the seal structure. Obviously, the bead shape must also be selected such that the seal forms a sufficiently leakproof joint.

The lowermost seal layer 4' is adhered to the surface of the tubular section 3 of the mounting frame. The seal 4 is placed in the tubular section 3, e.g., in such a manner that the tubular section (mounting frame) is affixed to a mounting jig wherein the tubular section is rotated at a preset speed. An extrusion spout (not shown) adapted close to the tubular surface feeds the caulking compound (e.g., Sikaflex®) onto the surface. In this embodiment the cross section of the extrusion spout is circular thus delivering the compound as a round bead out of the spout. Owing to the rotational movement of the tubular section, the caulking compound will become applied about the entire perimeter thereof thus forming an annular seal. However, the extrusion of the caulking compound is not cut off after one complete rotation, but rather is continued to apply a second layer, whereby the outer layer will adhere to the underlying layer. The caulking compound is extruded by at least two layers (4', 4") as shown in the diagrams. Hence, the seal will become so high that it can bend into the gap of the duct joint. While not generally necessary, in principle even more than two layers may be applied.

To a person skilled in the art it is obvious that the invention is not limited by the above-described exemplary embodiments, but rather may be varied within the scope of the appended claims. Accordingly, the type of caulking compound used may be different from that mentioned above. The essential feature of the invention is that the curing caulking compound makes it adhere to the tubular section and the outer compound layer similarly adheres to seal inner layer.

## Claims

1. A method for forming a seal between air ducts and/or terminal units thereof, the method comprising the step of extruding a caulking compound about the perimeter of the air duct to form a continuous seal (4), wherein the caulking compound is continuously extruded by at least two layers so that a second layer (4') is extruded radially over the first layer (4"), and that the caulking compound is extruded as a bead of a substantially round cross section.

2. The method of claim 1, **characterized in that** the caulking com-pound is extruded about the perimeter of a generally round duct and/or a terminal device thereof.

3. An air duct (3) comprising a seal (4) for sealing joints between air ducts and/or terminal units thereof, said seal (4) extending annularly about the entire perimeter of the duct (3) and having an at least partially elastic structure, said seal (4) being formed by extruding a caulking compound about the perimeter of the air duct to form a continuous seal, wherein the seal comprises two radially superimposed seal layers (4', 4") adhering to each other, and that both of the caulking compound layers (4', 4") have a substantially round cross section.

## Patentansprüche

1. **Verfahren** zum Formen einer Dichtung zwischen Luftkanälen und/oder Endeinheiten davon, das Verfahren mit dem Schritt des Extrudierens einer abdichtenden Zusammensetzung um den Umfang des Luftkanals zum Formen einer kontinuierlichen Dichtung (4), wobei die abdichtende Zusammensetzung mit zumindest zwei Schichten kontinuierlich so extrudiert wird, dass eine zweite Schicht (4') radial über die erste Schicht (4") extrudiert wird, und so dass die abdichtende Zusammensetzung als ein Wulst mit im Wesentlichen runden Querschnitt extrudiert wird.

2. Verfahren nach Anspruch 1, **dadurch gekennzeichnet, dass** die abdichtende Zusammensetzung um den Umfang eines im Wesentlichen runden Kanals und/oder eine Endvorrichtung davon extrudiert wird.

3. **Luftkanal** (3), mit einer Dichtung (4) zum Dichten von Fugen zwischen Luftkanälen und/oder Endeinheiten davon, wobei sich die Dichtung (4) ringförmig um den gesamten Umfang des Kanals (3) erstreckt und eine zumindest teilweise elastische Struktur aufweist, wobei die Dichtung (4) durch Extrusion einer abdichtenden Zusammensetzung um den Umfang des Luftkanals zum Formen einer kontinuierlichen Dichtung geformt ist, wobei die Dichtung zwei radial überlagerte Dichtungsschichten (4', 4") umfasst, die aneinander haften, und wobei beide der Schichten (4', 4") der abdichtenden Zusammensetzung einen im Wesentlichen runden Querschnitt aufweisen.

## Revendications

1. Procédé pour former un joint d'étanchéité entre des conduits d'air et/ou des unités terminales de ceux-ci, le procédé comprenant l'étape d'extrusion d'un composé de mastic sur le périmètre du conduit d'air afin de former un joint d'étanchéité continu (4), étant précisé que le composé de mastic est extrudé en continu grâce à au moins deux couches de telle sorte qu'une deuxième couche (4') soit extrudée radialement sur la première couche (4"), et que le composé de mastic est extrudé sous la forme d'un bourrelet à section transversale globalement ronde.

2. Procédé de la revendication 1, **caractérisé en ce que** le composé de mastic est extrudé sur le périmètre d'un conduit globalement rond et/ou d'un dispositif terminal de celui-ci.

3. Conduit d'air (3) comprenant un joint d'étanchéité (4) pour rendre étanches des joints entre des conduits d'air et/ou des unités terminales de ceux-ci, ledit joint d'étanchéité (4) s'étendant suivant une forme annulaire sur tout le périmètre du conduit (3) et présentant une structure au moins en partie élastique, ledit joint d'étanchéité (4) étant formé par extrusion d'un composé de mastic sur le périmètre du conduit d'air afin de former un joint d'étanchéité continu, étant précisé que le joint d'étanchéité comprend deux couches d'étanchéité (4', 4") superposées radialement, qui adhèrent l'une à l'autre, et que les deux couches de composé de mastic (4', 4") ont une section transversale globalement ronde.
